# EUROPÄISCHE PATENTSCHRIFT

(11) **EP 3 475 072 B1**
(45) Veröffentlichungstag und Bekanntmachung des Hinweises auf die Patenterteilung: **06.05.2020**
(21) Anmeldenummer: 17714437.5
(22) Anmeldetag: 30.03.2017
(51) Int. Cl.: B29D 30/06, B60C 5/14, B60C 1/00, B60C 19/12

(54) **SELBSTDICHTENDER FAHRZEUGLUFTREIFEN UND VERFAHREN ZU DESSEN HERSTELLUNG**
SELF-SEALING PNEUMATIC VEHICLE TYRE AND METHOD FOR THE PRODUCTION THEREOF
PNEUMATIQUE DE VÉHICULE AUTOÉTANCHÉIFIANT ET PROCÉDÉ POUR SA FABRICATION

(30) Priorität: 22.06.2016 DE 102016211111
(43) Veröffentlichungstag der Anmeldung: 01.05.2019
(73) Patentinhaber: Continental Reifen Deutschland GmbH, 30165 Hannover (DE)
(72) Erfinder: DAHLKE, Markus, 31515 Wunstorf (DE); GUARDALABENE, Joe, 30659 Hannover (DE); SCHAX, Fabian, 30926 Seelze (DE); TYBURSKI, Andreas, 31241 Ilsede (DE)
(74) Vertreter: Finger, Karsten
(86) Internationale Anmeldenummer: PCT/EP2017/057483
(87) Internationale Veröffentlichungsnummer: WO 2017/220225

(56) Entgegenhaltungen:
- WO-A1-2011/009909
- WO-A1-2015/079384
- DE-U1-202015 006 945

## Beschreibung

Die Erfindung betrifft einen selbstdichtenden Fahrzeugluftreifen mit einem Gürtelpaket, einem radial oberhalb des Gürtelpakets angeordneten Laufstreifen und einer radial innen angeordneten luftdicht ausgeführten Innenschicht, wobei die Selbstdichtung des Fahrzeugluftreifens durch eine nach der Vulkanisation des Fahrzeugluftreifens nachträglich radial innen aufgebrachten Dichtmittellage erhalten ist, wobei die Dichtmittellage im Wesentlichen die Breite des Gürtelpakets aufweist und im Wesentlichen in dessen Projektion angeordnet ist und einen in der die Reifenachse beinhaltenden Querschnittsebene ausgebildeten Querschnitt mit einer in axialer Richtung im Wesentlichen parallel zum Gürtelpaket verlaufenden Oberfläche und einer im Wesentlichen in radialer Richtung verlaufenden Oberfläche aufweist.
Die Erfindung betrifft ferner ein Verfahren zur Herstellung eines derartigen selbstdichtenden Fahrzeugluftreifens.

Derartige selbstdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.

Das Dichtmittel wird von der Anmelderin unter dem Namen ContiSeal ® eingesetzt. Das Dichtmittel zeichnet sich durch Luftdichtigkeit, starke Klebrigkeit und ausgewogenes Fließverhalten aus.

Aufgrund der starken Klebrigkeit des Dichtmittels der Dichtmittellage bleiben unerwünschte Fremdkörper, die in das Reifeninnere (z.B. während der Lagerung der Reifen) gelangen, an der Dichtmittellage haften, und zwar hierbei insbesondere an der radial nach innen gerichteten Oberfläche der Dichtmittellage. Die radial nach außen gerichtete Oberfläche haftet an der Innenschicht und ist daher nicht exponiert.

Die US 2014/0174639 A1 offenbart zum Herabsetzen der Klebrigkeit, die Dichtmittelschicht mit Baumwollfasern oder Aramidfasern oder Glasfasern oder lamellaren Füllstoffen wie Graphite, Glimmer oder Talk zu beschichten. Allerdings können derartige Partikel die Dichtwirkung im Pannenfall negativ beeinträchtigen, da sie den Verschluss der Pannenstelle negativ beeinflussen können.

In der DE 202015006945 U1 offenbart einen selbstdichtenden Fahrzeugluftreifen mit einem Gürtelpaket, einem radial oberhalb des Gürtelpakets angeordneten Laufstreifen und einer radial innen angeordneten luftdicht ausgeführten Innenschicht, wobei die Selbstdichtung des Fahrzeugluftreifens durch eine nach der Vulkanisation des Fahrzeugluftreifens nachträglich radial innen aufgebrachten Dichtmittellage erhalten ist, wobei die Dichtmittellage im Wesentlichen die Breite des Gürtelpakets aufweist und im Wesentlichen in dessen Projektion angeordnet ist und einen in der die Reifenachse beinhaltenden Querschnittsebene ausgebildeten Querschnitt mit einer in axialer Richtung im Wesentlichen parallel zum Gürtelpaket verlaufenden Oberfläche und einer im Wesentlichen in radialer Richtung verlaufenden Oberfläche aufweist. Die radial nach innen gerichtete in axialer Richtung im Wesentlichen parallel zum Gürtelpaket verlaufenden Oberfläche der Dichtmittellage weist eine Beschichtung auf, die wenigstens ein Alkalisalz wenigstens einer Fettsäure und/oder wenigstens ein Erdalkalisalz wenigstens einer Fettsäure enthält.

Die WO 2015079384 A1 offenbart ebenfalls einen selbstdichtenden Fahrzeugluftreifen mit radial innen angebrachter Dichtmittellag, wobei die radial nach innen gerichtete in axialer Richtung im Wesentlichen parallel zum Gürtelpaket verlaufenden Oberfläche der Dichtmittellage einen stabilen (*engl.* "self-supporting") elastomeren Film enthaltend wenigstens 50 Gew.-% thermoplastisches, elastomeres Polyurethan (TPU) aufweist.

Die WO 2011009909 A1 offenbart ebenfalls einen selbstdichtenden Fahrzeugluftreifen mit radial innen angebrachter Dichtmittellag, wobei die radial nach innen gerichtete in axialer Richtung im Wesentlichen parallel zum Gürtelpaket verlaufenden Oberfläche der Dichtmittellage eine abtrennbare Schutzschicht aufweist, welche ein thermoplastischer Film ist, der wenigstens ein fluoriertes Polymer enthält.

Die Aufgabe der vorliegenden Erfindung besteht darin, einen selbstdichtenden Fahrzeugluftreifen und ein Verfahren zu dessen Herstellung bereitzustellen, bei dem keine Fremdkörper (oder nur in sehr geringem Ausmaß) auf der Dichtmittellage im Reifeninneren anhaften, wobei die Dichtleistung des Dichtmittels nicht negativ beeinträchtigt werden soll.

Die Aufgabe wird erfindungsgemäß dadurch gelöst, dass wenigstens die in axialer Richtung im Wesentlichen parallel zum Gürtelpaket verlaufende Oberfläche der Dichtmittellage umlaufend eine Beschichtung aufweist, die wenigstens Elastomer-Partikel enthält.

Bei dem erfindungsgemäßen Verfahren wird wenigstens die in axialer Richtung im Wesentlichen parallel zum Gürtelpaket verlaufende Oberfläche der Dichtmittellage umlaufend mit einer Beschichtung beschichtet, die wenigstens Elastomer-Partikel enthält.

Eine derartige Beschichtung mit Elastomer-Partikeln setzt die Klebrigkeit der radial nach innen gerichteten Oberfläche der Dichtmittellage derart signifikant herab, dass (nahezu) keine unerwünschten Fremdkörper an der Dichtmittellage anhaften.

Elastomer-Partikel als Beschichtung beeinträchtigen zudem nicht den Verschluss der Pannenstelle. Der erfindungsgemäße Fahrzeugluftreifen weist somit zudem keine negative Beeinträchtigung hinsichtlich der selbstdichtenden Eigenschaften auf.

Gemäß einer bevorzugten Ausführungsform der Erfindung weisen die Elastomer-Partikel eine Partikel-Größe von 0,05 bis 2 mm auf. Die Elastomer-Partikel können somit Pulver oder Granulat sein. Die Form der Elastomer-Partikel kann dabei sphärisch, flächig oder länglich sein. Ab einer Partikelgröße von > 1 mm handelt es sich um Granulat.
Pulver wird im Rahmen der vorliegenden Erfindung auch als Mehl bezeichnet.

Gemäß einer bevorzugten Ausführungsform der Erfindung handelt es sich um Elastomer-Partikel, die als Pulver vorliegen und bevorzugt eine Partikelgröße von 0,05 bis 1 mm, besonders bevorzugt 0,1 bis 1 mm, aufweisen.
Unter dem Begriff Partikelgröße ist im Rahmen der vorliegenden Erfindung das Zahlenmittel der Partikelgrößenverteilung zu verstehen. Die Partikelgröße bzw. Partikelgrößenverteilung wird im Rahmen der vorliegenden Erfindung gemäß DIN 53734 über den Siebrückstand aus der Luftstrahlsiebung bestimmt.

Unter dem Begriff "Elastomer-Partikel" werden im Rahmen der vorliegenden Erfindung vulkanisierte, d.h. vernetzte, oder zumindest teilweise vulkanisierte oder unvulkanisierte oder devulkanisierte oder zumindest teilweise devulkanisierte Partikel von Elastomeren oder Elastomermischungen verstanden.
Vulkanisierte Elastomer-Partikel können beispielsweise und bevorzugt je nach Partikelgröße Gummimehl oder Gummipulver oder Gummigranulat sein, welche man durch Mahlen von vulkanisierten technischen Gummiartikeln, inkl. Fahrzeugreifen bzw. den Reifenbauteilen, oder durch Abrauen von Fahrzeugreifen, bevorzugt Altreifen, erhalten kann. Unter Altreifen werden Fahrzeugreifen verstanden, die nach der Benutzung dem Recycling zur Verfügung stehen.
Teilweise vulkanisierte Elastomer-Partikel können beispielsweise und bevorzugt Partikel einer vorvernetzten Kautschukmischung aus der Produktion von Kautschukmischungen, bevorzugt für Fahrzeugreifen, sein. Auch diese können als Mehl/Pulver oder Granulat vorliegen.

Unvulkanisierte Elastomer-Partikel können beispielsweise und bevorzugt Partikel einer unvulkanisierten Kautschukmischung aus der Produktion von Kautschukmischungen, bevorzugt für Fahrzeugreifen, sein.
Devulkanisierte Elastomer-Partikel können beispielsweise und bevorzugt Partikel einer devulkanisierten Kautschukmischung aus Altreifen sein, welche auch als Gummiregenerat bekannt sind. Verfahren zum Devulkanisieren von vulkanisierten, insbesondere schwefelvernetzten, Kautschukmischungen sind dem Fachmann bekannt. Hierbei wird das bevorzugt schwefelvernetzte Gummivulkanisat zunächst zerkleinert. Das Zerkleinern des schwefelvernetzten Gummivulkanisates erfolgt mittels im Stand der Technik bekannten Mahlverfahren, insbesondere einem ambienten oder kryogenen Mahlverfahren. Das zerkleinerte Gummivulkanisat wird anschließend devulkanisiert, wobei im Fall einer Schwefelvernetzung möglichst alle Schwefelbrücken aufgebrochen werden ohne, dass die Polymerketten beschädigt werden. Ein geeignetes Verfahren ist beispielsweise in der WO 2014032818 A1 beschrieben.
Teilweise devulkanisierte Elastomer-Partikel sind entsprechend Partikel, die nicht vollständig devulkanisiert sind.
Bevorzugt basieren die Elastomer-Partikel auf natürlichem Polyisopren und/oder synthetischem Polyisopren und/oder Polybutadien und /oder Styrol-Butadien-Copolymer und/oder Butyl-Kautschuk und/oder Halobutylkautschuk und/oder Nitril-Butadien-Kautschuk (NBR) und/oder Hydrierter Acrylnitrilbutadien-Kautschuk (HNBR) und/oder Ethylen-Propylen-Dien-Kautschuk (EPDM) jeweils in der entsprechenden Form vor, also unvulkanisiert, zumindest teilweise vulkanisiert, vulkanisiert, devulkanisiert oder zumindest teilweise devulkanisiert.

Gemäß einer besonders vorteilhaften Ausführungsform der Erfindung handelt es sich bei den Elastomer-Partikeln um wenigstens ein Gummiregenerat, inkl. der beschriebenen bevorzugten und besonders bevorzugten Ausführungsformen.

Im Falle von schwefelvernetzten Gummivulkanisaten können diese dabei bevorzugt auf folgenden Kautschuken alleine oder im Verschnitt basieren: natürliches Polyisopren (NR) und/oder synthetisches Polyisopren (IR) und/oder Butadienkautschuk (BR) und/oder Styrol-Butadienkautschuk (SBR) und/oder Butyl-Kautschuk und/oder Halobutylkautschuk und/oder Nitril-Butadien-Kautschuk (NBR) und/oder Hydrierter Acrylnitrilbutadien-Kautschuk (HNBR) und/oder Ethylen-Propylen-Dien-Kautschuk (EPDM). Auch hier liegen die genannten Kautschuke dann in der jeweils in der entsprechenden Form vor, also unvulkanisiert, zumindest teilweise vulkanisiert, vulkanisiert, devulkanisiert oder zumindest teilweise devulkanisiert und zwar als Mehl/Pulver oder Granulat.
Besonders bevorzugt enthält das schwefelvernetzte Gummivulkanisat natürliches Polyisopren (NR) und/oder synthetisches Polyisopren (IR) und/oder Butadienkautschuk (BR) und/oder Styrol-Butadienkautschuk (SBR) und/oder Butyl-Kautschuk und/oder Halobutylkautschuk.

Es ist auch ein Gemisch verschiedener der genannten Elastomer-Partikel denkbar.

Ein weiterer Gegenstand der vorliegenden Erfindung ist ein Verfahren zur Herstellung eines selbstdichtenden Fahrzeugluftreifens, wobei sämtliche beschriebenen Ausführungsformen, die insbesondere die Beschichtung und das Auftragen betreffen, sowohl für den erfindungsgemäßen Fahrzeugluftreifen als auch für das erfindungsgemäße Verfahren gelten.

Die Elastomer-Partikel werden bevorzugt mit einer Sprühpistole mit geeignetem Düsendurchmesser auf die zu beschichtenden Innenflächen des Reifens aufgetragen, wobei der Reifen hierbei bevorzugt rotiert wird. Hierdurch werden die Elastomer-Partikel gleichmäßig auf der Dichtmittellage verteilt.

Geeignete Sprühpistolen, insbesondere zum Auftragen von, bevorzugt wässrigen, Suspensionen der oben genannten Art, sind dem Fachmann bekannt. Sprühpistolen werden auch als Spritzpistolen bezeichnet.
Die verwendete Sprühpistole weist bevorzugt eine Düse auf, deren Öffnung einen Durchmesser von 0,1 bis 6 mm aufweist.
Das Sprühen erfolgt bevorzugt programmgesteuert, wobei die Sprühpistole gezielt geführt wird und Bereiche des Reifens, in denen die Beschichtung nicht aufgetragen werden soll, wie z. B. der Wulstbereich, ausgespart werden. Somit wird die Beschichtung bevorzugt nicht dort aufgetragen, wo der erfindungsgemäße Fahrzeugluftreifen auf der Felge aufsitzt bzw. Kontakt mit der Felge hat, um ein Verrutschen zwischen Reifen und Felge im Kontaktbereich zu vermeiden.

Das Auftragen mit einer Sprühpistole ist somit vergleichsweise einfach und kann automatisiert erfolgen.

Gemäß einer bevorzugten Weiterbildung der Erfindung enthält die Beschichtung zusätzlich wenigstens ein Alkalisalz wenigstens einer Fettsäure und/oder wenigstens ein Erdalkalisalz wenigstens einer Fettsäure. Bevorzugt wird die Beschichtung in diesem Fall als wässrige Suspension enthaltend die Elastomer-Partikel aufgetragen, wobei zumindest ein Großteil des in der Suspension enthaltenen Wassers verdampft und eine Beschichtung verbleibt, die neben den Elastomer-Partikeln wenigstens ein Alkalisalz wenigstens einer Fettsäure und/oder wenigstens ein Erdalkalisalz wenigstens einer Fettsäure enthält.
Hierbei verdampft je nach Verfahren nicht die gesamte Menge des Wassers und eine Restmenge kann somit in der Beschichtung verbleiben.
Gemäß einer bevorzugten Ausführungsform der Erfindung enthält die Beschichtung daher Wasser.
Gemäß einer weiteren bevorzugten Ausführungsform enthält die Beschichtung nur sehr geringe Mengen oder gar kein Wasser, d. h. 0 bis 1 Gew.-% Wasser.
Wenn die Beschichtung eines oder mehrere Salze von Fettsäuren enthält, wird die Klebrigkeit der Oberfläche der Dichtmittellage weiter herabgesetzt. Gleichzeitig wird die Dichtleistung des selbstdichtenden Fahrzeugluftreifens mit einer derartigen Beschichtung nicht negativ beeinträchtigt.

Fettsäuren sind dem Fachmann bekannt und stellen gemäß Römpp Online ® 2015 "aliphatische, gesättigte und ungesättigte Carbonsäuren mit bis auf wenige Ausnahmen unverzweigter Kohlenstoff-Kette" dar.
Besonders bevorzugt ist es im Rahmen der vorliegenden Erfindung, wenn die Fettsäure 8 bis 18 Kohlenstoffatome aufweist.
Hierdurch wird die oben beschriebene Reaktion von Aminen mit Peroxiden zu unerwünschten Kristallen besonders effektiv vermieden. Bei der Anzahl von 8 bis 18 Kohlenstoffatomen ist es besonders bevorzugt, wenn es sich um lineare unverzweigte Kohlenstoffketten handelt.
Bevorzugte Fettsäuren, bzw. deren Salze wie unten beschrieben, sind beispielsweise und insbesondere
Octansäure (auch Caprylsäure genannt) mit 8 Kohlenstoffatomen und/oder Tetradecansäure (auch Myristinsäure genannt) mit 14 Kohlenstoffatomen und/oder Hexadecansäure (auch Palmitinsäure genannt) mit 16 Kohlenstoffatomen und/oder Octadecansäure (auch Stearinsäure genannt) mit 18 Kohlenstoffatomen.

Gemäß einer bevorzugten Ausführungsform der Erfindung ist die Fettsäure ausgewählt aus der Gruppe bestehend aus Octansäure und/oder Tetradecansäure und/oder Hexadecansäure und/oder Octadecansäure.

Gemäß einer besonders bevorzugten Ausführungsform der Erfindung handelt es sich bei der Fettsäure wenigstens um Octadecansäure.

Erfindungsgemäß ist die wenigstens eine Fettsäure in Form wenigstens eines Alkali- und/oder Erdalkalisalzes in der Beschichtung enthalten.
Unter "Alkalisalz wenigstens einer Fettsäure" ist im Rahmen der vorliegenden Erfindung das Alkalimetallsalz wenigstens einer Fettsäure zu verstehen, wobei Alkalimetalle in Salzen formal einfach positiv geladen sind, wie beispielsweise und insbesondere die Alkalimetallionen von Lithium (Li⁺), Natrium (Na⁺), Kalium (K⁺), Rubidium (Rb⁺). Bevorzugt handelt es sich bei dem Alkalimetallion des Salzes um Lithium (Li⁺) und/oder Natrium (Na⁺) und/oder Kalium (K⁺).
Die Ionen der Fettsäure sind formal einfach negativ geladen, sodass bei dem Alkalisalz der Fettsäure jeweils ein Alkalimetallion und ein Ion der Fettsäure (Carboxylat-Ion) einer formal neutralen Ladung entsprechen.

Es kann sich bei dem wenigstens einen Alkalisalz wenigstens einer Fettsäure auch um ein Gemisch verschiedener Alkalisalze handeln, bei dem die Alkalimetalle und/oder die Fettsäuren gleich oder verschieden voneinander sind. Das Gleiche gilt für das wenigstens eine Erdalkalisalz wenigstens einer Fettsäure. Auch hier kann es sich um ein Gemisch handeln, bei dem die Erdalkalimetalle und/oder Fettsäuren gleich oder verschieden voneinander sind.

Unter "Erdalkalisalz wenigstens einer Fettsäure" ist im Rahmen der vorliegenden Erfindung das Erdalkalimetallsalz wenigstens einer Fettsäure zu verstehen, wobei Erdalkalimetalle in Salzen formal zweifach positiv geladen sind, wie beispielsweise und insbesondere die Erdalkalimetallionen Beryllium (Be²⁺), Magnesium (Mg²⁺), Calcium (Ca²⁺), usw.
Bevorzugt handelt es sich bei dem Erdalkalimetallion des Salzes um Magnesium (Mg²⁺) und/oder Calcium (Ca²⁺), besonders bevorzugt Calcium (Ca²⁺).
Bei dem Erdalkalisalz der Fettsäure entsprechen ein Erdalkalimetallion und zwei Ionen der Fettsäure einer formal neutralen Ladung.

Gemäß einer bevorzugten Ausführungsform der Erfindung enthält die Beschichtung wenigstens ein Alkalisalz wenigstens einer Fettsäure und wenigstens ein Erdalkalisalz wenigstens einer Fettsäure.
Gemäß einer besonders bevorzugten Ausführungsform der Erfindung ist das Erdalkalisalz wenigstens einer Fettsäure wenigstens Calciumstearat.

Eine geeignete wässrige Suspension, die Calciumstearat und wenigstens ein Alkalisalz wenigstens einer Fettsäure enthält, ist beispielsweise unter dem Handelsnamen Rhenodiv® BO 7672-1 der Firma Rheinchemie erhältlich.
Eine derartige Suspension enthält vor dem Auftragen und Trocknen 58 bis 70 Gew.-% Wasser, 10 bis 20 Gew.-% wenigstens eines Alkalisalzes wenigstens einer Fettsäure, 10 bis 20 Gew.-% Calciumstearat und weniger als 2 Gew.-% Zusatzstoffe bzw. Verunreinigungen.
Hierbei beträgt das Gewichtsverhältnis von Elastomer-Partikeln zur wässrigen Suspension beim Auftragen bevorzugt 1 zu 10 bis 1 zu 1.
Unter der Annahme, dass sämtliches Wasser aus der Suspension verdampft ist, beträgt das Gewichtsverhältnis der Elastomer-Partikel zum festen Rückstand (aus Alkalisalz wenigstens einer Fettsäure und Calciumstearat) im getrockneten Reifen bevorzugt somit 1 zu 4,2 bis 1 zu 0,3.
Hiermit wird eine negative Beeinträchtigung der Dichtwirkung im Pannenfall besonders effektiv vermieden.

Wenn die Elastomer-Partikel wie beschrieben in einer Suspension aufgetragen werden, erfolgt das Auftragen bevorzugt mittels einer Sprühpistole oder einem rotierenden Sprühteller. Hierbei muss ggf. die Vorrichtung, insbesondere die Düse einer Sprühpistole, angepasst werden. Im Fall des Auftragens mit einem rotierenden Sprühteller kann der Reifen ebenfalls rotiert werden, bevorzugt wird er jedoch dann nicht rotiert.
Sprühteller sind dem Fachmann bekannt. Hierbei wird die zu sprühende Flüssigkeit (oder Suspension ggf. unter Anpassung der Rotationsgeschwindigkeit des Sprühtellers) über einen Kanal auf den Teller gebracht, welcher aufgrund der Rotation über Zentripetalkräfte die Flüssigkeit bzw. Suspension auf das Reifeninnere schleudert. Auch hier erfolgt das Sprühen bevorzugt gezielt unter Aussparung der Bereiche, die nicht beschichtet werden sollen, wie z. B. der Wulstbereich.

Im Rahmen der vorliegenden Erfindung bedeutet der Ausdruck "im Wesentlichen" bei der Beschreibung der Anordnung der einzelnen Bauteile des erfindungsgemäßen Fahrzeugluftreifens, dass übliche herstellungsbedingte geringfügige Schwankungen mit eingeschlossen sind.
Die Dichtmittellage weist im Wesentlichen die Breite des Gürtelpakets auf.
Die Dichtmittellage ist im Wesentlichen in dessen Projektion (der Projektion des Gürtelpaketes) angeordnet, d.h. sie verläuft radial innerhalb des Gürtelpaketes im Wesentlichen parallel zu diesem.
Die Dichtmittellage weist einen in der die Reifenachse beinhaltenden Querschnittsebene ausgebildeten Querschnitt mit einer in axialer Richtung im Wesentlichen parallel zum Gürtelpaket verlaufenden Oberfläche und einer im Wesentlichen in radialer Richtung verlaufenden Oberfläche auf.
Die Dichtmittellage weist bevorzugt im Wesentlichen einen rechteckigen Querschnitt auf, wobei sie je nach Ausgestaltung der Reifendimensionen insbesondere in Projektion der Schulterkanten des Gürtelpaketes eine Krümmung aufweisen kann.
Die Dichtmittellage wird nach radial außen durch die Innenschicht und nach radial innen durch ihre radial nach innen gerichtete in axialer Richtung, im Wesentlichen parallel zum Gürtelpaket, verlaufenden Oberfläche begrenzt und zu beiden Seiten, bevorzugt im Wesentlichen symmetrisch, durch die in radialer Richtung, im Wesentlichen senkrecht zum Gürtelpaket, verlaufenden Oberflächen begrenzt.

Um die Klebrigkeit der Dichtmittellage (auf der radial nach innen gerichteten und damit nach innen exponierten Oberfläche) wirksam herabzusetzen, ist die Beschichtung wenigstens auf die radial nach innen gerichtete im Wesentlichen parallel zum Gürtelpaket verlaufende Oberfläche der Dichtmittellage umlaufend aufgebracht.
Da die radial nach innen gerichtete und damit nach innen exponierte Oberfläche der Dichtmittellage üblicherweise rau ist und die Elastomer-Partikel keine ebene Fläche bilden, wird die resultierende Dicke der Beschichtung überwiegend durch die Partikelgröße der Elastomer-Partikel bestimmt.
Für den Fall, dass die Elastomer-Partikel in der beschriebenen bevorzugt wässrigen Suspension enthalten sind, wird die resultierende Dicke der Beschichtung ebenfalls überwiegend durch die Partikelgröße der Elastomer-Partikel bestimmt.

Gemäß einer bevorzugten Weiterbildung der Erfindung weist zusätzlich wenigstens die in radialer Richtung, im Wesentlichen senkrecht zum Gürtelpaket, verlaufende Oberfläche die Beschichtung, wie oben beschrieben inklusive sämtlicher Ausführungsformen enthaltend wenigstens ein Alkalisalz wenigstens einer Fettsäure und/oder wenigstens ein Erdalkalisalz wenigstens einer Fettsäure, auf Hierbei sind beide seitlichen in radialer Richtung verlaufenden Oberflächen der Dichtmittellage gemeint (im oben ausgeführten Querschnitt links und rechts).
Besonders bevorzugt enthält die Beschichtung neben Elastomer-Partikeln zusätzlich wenigstens ein Alkalisalz wenigstens einer Fettsäure und/oder wenigstens ein Erdalkalisalz wenigstens einer Fettsäure.
Hierdurch ist die gesamte exponierte Oberfläche der Dichtmittellage beschichtet und die Herabsetzung der Klebrigkeit somit über den gesamten Bereich der Dichtmittellage, also auch an den seitlichen Bereichen der Dichtmittellage, besonders wirksam.

Herstellungsbedingt kann die Beschichtung derart auf die in nach innen exponierten Oberflächen der Dichtmittellage aufgetragen sein, dass an beiden Seiten in axialer Richtung eine Überlappung mit der Innenschicht vorhanden ist. Diese Überlappung wäre im Fall des Auftragens in der beschriebenen wässrigen Suspension durch einen Grauschleier auf den entsprechenden Bereichen der Innenschicht erkennbar.
Die axiale Breite der Überlappung beträgt bevorzugt an beiden Seiten jeweils 0,5 bis 10 mm, bevorzugt 0,5 bis 2 mm, besonders bevorzugt 0,5 bis 1 mm.
Für den Fall, dass die Elastomer-Partikel trocken, d.h. ohne Suspension, aufgetragen werden, haften diese jedoch je nach Elastomer nicht lange an der Innenschicht, sodass von keiner dauerhaften Überlappung mit der Innenschicht auszugehen ist.

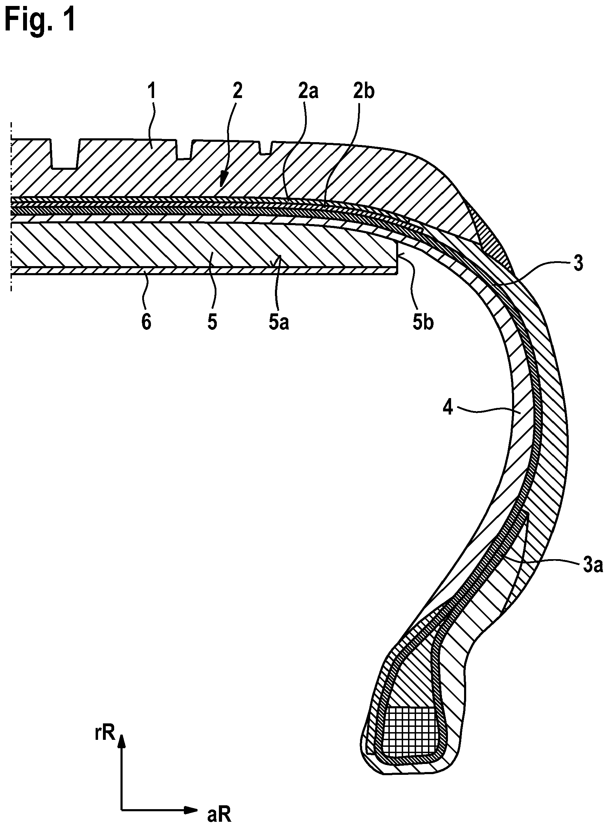

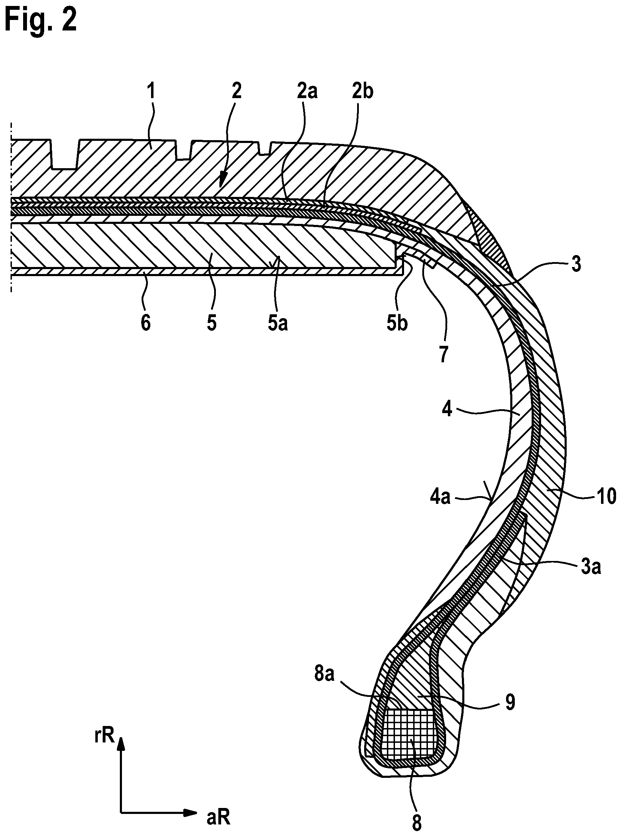

Weitere Merkmale, Vorteile und Einzelheiten der Erfindung werden anhand der Figuren 1 und 2, die schematische Ausführungsbeispiele darstellen, näher erläutert.

Die wesentlichen Bestandteile, aus welchen sich der erfindungsgemäße selbstdichtende Reifen zusammensetzt, sind ein profilierter Laufstreifen 1, ein bei der gezeigten Ausführung aus zwei Lagen 2a, 2b bestehendes Gürtelpaket 2, eine einlagige Karkasse 3, welche um die Wulstkerne 8 und Wulstkernprofile 9 von axial innen nach axial außen herumgeführt ist und im Karkasshochschlag 3a endet, sowie Seitenwände 10. Die beiden Lagen 2a, 2b des Gürtelpakets 2 bestehen aus in eine Gummimischung eingebetteten Festigkeitsträgern aus Stahlcord, welche innerhalb jeder Lage parallel zueinander verlaufen, wobei die Stahlcorde der einen Lage 2a in kreuzender Anordnung zu den Stahlcorden der zweiten Lage 2b orientiert sind und mit der Reifenumfangsrichtung jeweils einen Winkel zwischen 15° und 45° einschließen. Auch die einlagige Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Selbstdichtung des Fahrzeugluftreifens ist durch eine nach der Vulkanisation des Fahrzeugluftreifens nachträglich radial innen umlaufend aufgebrachte Dichtmittellage 5 erhalten. Die Dichtmittellage 5 weist im Wesentlichen die Breite des Gürtelpakets 2 auf und ist im Wesentlichen in dessen Projektion angeordnet und weist einen in der die Reifenachse beinhaltenden Querschnittsebene ausgebildeten Querschnitt mit einer in axialer Richtung im Wesentlichen parallel zum Gürtelpaket verlaufenden Oberfläche 5a und einer im Wesentlichen in radialer Richtung verlaufenden Oberfläche 5b auf Die Oberfläche 5b ist in axialer Richtung auf beiden Seiten vorhanden und stellt somit umlaufend die seitlichen Begrenzungen der Dichtmittellage dar.

Die Dichtmittellage 5 weist gemäß des Beispiels in Figur 1 auf der radial nach innen gerichteten Oberfläche 5a eine Beschichtung 6 auf, die wenigstens Elastomer-Partikel enthält, beispielsweise mit einer Partikelgröße von 0,35 bis 0,55 mm.
Beispielsweise enthält die Beschichtung zusätzlich wenigstens ein Alkalisalz wenigstens einer Fettsäure und wenigstens ein Erdalkalisalz wenigstens einer Fettsäure, wobei das Erdalkalisalz wenigstens einer Fettsäure wenigstens Calciumstearat ist. Beispielsweise ist die Fettsäure ausgewählt aus der Gruppe bestehend aus Octansäure und/oder Tetradecansäure und/oder Hexadecansäure und/oder Octadecansäure.
Eine derartiger selbstdichtender Fahrzeugluftreifen kann beispielsweise erhalten werden, indem zunächst der Fahrzeugluftreifen hergestellt und anschließend die Dichtmittellage, wie im Stand der Technik bekannt, aufgebracht wird und anschließend eine wässrige Suspension enthaltend Gummiregenerat mit einer mittleren Partikelgröße von 0,42 mm und wenigstens ein Alkalisalz wenigstens einer Fettsäure und/oder wenigstens ein Erdalkalisalz wenigstens einer Fettsäure, wie beispielsweise Rhenodiv® BO 7672-1 der Firma Rheinchemie, mit einer Sprühpistole aufgebracht und getrocknet wird. Das Gummiregenerat wird hierbei vor dem Auftragen in die beschriebene Suspension, beispielsweise Rhenodiv® BO 7672-1, eingemischt. Das Gewichtsverhältnis von Gummiregenerat zu der Suspension beträgt vor dem Einmischen beispielsweise 1 zu 3.

Die Beschichtung der Oberfläche 5a in dem Beispiel gemäß Figur 1 kann aber auch nur Elastomer-Partikel, wie bevorzugt Gummiregenerat aus Altreifen, enthalten. Die Partikel werden ebenfalls mit einer Sprühpistole mit geeigneter Düsengröße aufgebracht.

Die Dichtmittellage 5 weist gemäß des Beispiels in Figur 2 auf der in axialer Richtung im Wesentlichen parallel zum Gürtelpaket verlaufenden Oberfläche 5a und zusätzlich auf der im Wesentlichen in radialer Richtung verlaufenden Oberfläche 5b die Beschichtung 6 auf, die wenigstens Elastomer-Partikel enthält. Es gelten die bei Figur 1 beschriebenen Ausführungen, wobei die Beschichtung zusätzlich wenigstens ein Alkalisalz wenigstens einer Fettsäure und wenigstens ein Erdalkalisalz wenigstens einer Fettsäure enthält. Zudem überlappt die Beschichtung herstellungsbedingt derart an beiden Seiten in axialer Richtung mit der Innenschicht, wobei die Überlappung 7 an jeder Seite jeweils 0,5 bis 10 mm, bevorzugt 0,5 bis 2 mm, besonders bevorzugt zum Beispiel 1 mm beträgt.
Ein derartiger selbstdichtender Fahrzeugluftreifen kann wie bei Figur 1 beschrieben erhalten werden, wobei wenigstens die Flächen 5a und 5b durch Auftragen der Elastomer-Partikel in der genannten wässrigen Suspension mit einer Sprühpistole beschichtet werden.

### Bezugszeichenliste

1 Laufstreifen
2 Gürtelpaket
2a Gürtellage
2b Gürtellage
3 Karkasse
3a Karkasshochschlag
4 Innenschicht
4a radial nach innen gerichtete Oberfläche der Innenschicht
5 Dichtmittellage
5a radial nach innen gerichtete in axialer Richtung, im Wesentlichen parallel zum Gürtelpaket, verlaufende Oberfläche der Dichtmittellage
5b in radialer Richtung, im Wesentlichen senkrecht zum Gürtelpaket, verlaufende Oberfläche der Dichtmittellage
6 Beschichtung
7 Überlappung
8 Wulstkern
8a radial äußeres Erstreckungsende des Wulstkernes
9 Wulstkemprofil
10 Seitenwand

rR radiale Richtung
aR axiale Richtung

## Patentansprüche

1. Selbstdichtender Fahrzeugluftreifen mit einem Gürtelpaket (2), einem radial oberhalb des Gürtelpakets (2) angeordneten Laufstreifen (1) und einer radial innen angeordneten luftdicht ausgeführten Innenschicht (4), wobei die Selbstdichtung des Fahrzeugluftreifens durch eine nach der Vulkanisation des Fahrzeugluftreifens nachträglich radial innen aufgebrachten Dichtmittellage (5) erhalten ist, wobei die Dichtmittellage (5) im Wesentlichen die Breite des Gürtelpakets (2) aufweist und im Wesentlichen in dessen Projektion angeordnet ist und einen in der die Reifenachse beinhaltenden Querschnittsebene ausgebildeten Querschnitt mit einer in axialer Richtung im Wesentlichen parallel zum Gürtelpaket verlaufenden Oberfläche (5a) und einer im Wesentlichen in radialer Richtung verlaufenden Oberfläche (5b) aufweist, **dadurch gekennzeichnet, dass** wenigstens die in axialer Richtung im Wesentlichen parallel zum Gürtelpaket (2) verlaufende Oberfläche (5a) der Dichtmittellage (5) umlaufend eine Beschichtung (6) aufweist, die wenigstens Elastomer-Partikel enthält.

2. Selbstdichtender Fahrzeugluftreifen nach Anspruch 1, **dadurch gekennzeichnet, dass** die Elastomer-Partikel eine Partikelgröße von 0,05 bis 2 mm aufweisen.

3. Selbstdichtender Fahrzeugluftreifen nach einem der vorherigen Ansprüche, **dadurch gekennzeichnet, dass** die Elastomer-Partikel auf natürlichem Polyisopren und/oder synthetischem Polyisopren und/oder Polybutadien und /oder Styrol-Butadien-Copolymer und/oder Butyl-Kautschuk und/oder Halobutylkautschuk und/oder Nitril-Butadien-Kautschuk und/oder Hydriertem Acrylnitrilbutadien-Kautschuk und/oder Ethylen-Propylen-Dien-Kautschuk basieren.

4. Selbstdichtender Fahrzeugluftreifen nach einem der vorherigen Ansprüche, **dadurch gekennzeichnet, dass** es sich bei den Elastomer-Partikeln um wenigstens ein Gummiregenerat handelt.

5. Selbstdichtender Fahrzeugluftreifen nach einem der vorherigen Ansprüche, **dadurch gekennzeichnet, dass** die Beschichtung (6) zusätzlich wenigstens ein Alkalisalz wenigstens einer Fettsäure und/oder wenigstens ein Erdalkalisalz wenigstens einer Fettsäure enthält.

6. Selbstdichtender Fahrzeugluftreifen nach einem der vorherigen Ansprüche, **dadurch gekennzeichnet, dass** zusätzlich wenigstens die in radialer Richtung verlaufende Oberfläche (5b) die Beschichtung (6) aufweist.

7. Verfahren zur Herstellung eines selbstdichtenden Fahrzeugluftreifens mit einem Gürtelpaket (2), einem radial oberhalb des Gürtelpakets (2) angeordneten Laufstreifen (1) und einer radial innen angeordneten luftdicht ausgeführten Innenschicht (4), wobei die Selbstdichtung des Fahrzeugluftreifens durch eine nach der Vulkanisation des Fahrzeugluftreifens nachträglich radial innen aufgebrachten Dichtmittellage (5) erhalten ist, wobei die Dichtmittellage (5) in etwa die Breite des Gürtelpakets (2) aufweist und in etwa in dessen Projektion angeordnet ist und einen in der die Reifenachse beinhaltenden Querschnittsebene ausgebildeten Querschnitt mit einer in axialer Richtung im Wesentlichen parallel zum Gürtelpaket verlaufenden Oberfläche (5a) und einer im Wesentlichen in radialer Richtung verlaufenden Oberfläche (5b) aufweist, **dadurch gekennzeichnet, dass** wenigstens die in axialer Richtung im Wesentlichen parallel zum Gürtelpaket (2) verlaufende Oberfläche (5a) der Dichtmittellage (5) umlaufend mit einer Beschichtung (6) beschichtet wird, die wenigstens Elastomer-Partikel enthält.

8. Verfahren nach Anspruch 7, **dadurch gekennzeichnet, dass** die Elastomer-Partikel mit einer Sprühpistole aufgetragen werden.

9. Verfahren nach Anspruch 7, **dadurch gekennzeichnet, dass** die Elastomer-Partikel in einer wässrigen Suspension wenigstens eines Alkalisalzes wenigstens einer Fettsäure und/oder wenigstens eines Erdalkalisalzes wenigstens einer Fettsäure aufgetragen werden.

10. Verfahren nach Anspruch 9, **dadurch gekennzeichnet, dass** das Auftragen mit einer Sprühpistole oder einem rotierenden Sprühteller erfolgt.

## Claims

1. Self-sealing pneumatic vehicle tire having a belt package (2), a tread (1) arranged radially above the belt package (2) and an airtight inner layer (4) arranged radially on the inside, wherein the self-sealing of the pneumatic vehicle tire is obtained via a sealant layer (5) subsequently applied radially on the inside after the vulcanization of the pneumatic vehicle tire, wherein the sealant layer (5) has essentially the width of the belt package (2) and is arranged essentially in the projection thereof and has a cross section which is formed in a cross-sectional plane including the tire axis and has a surface (5a) running essentially parallel to the belt package in axial direction and a surface (5b) running essentially in radial direction, **characterized in that** at least the surface (5a) of the sealant layer (5) running essentially parallel to the belt package (2) in axial direction has a circumferential coating (6) that contains at least elastomer particles.

2. Self-sealing pneumatic vehicle tire according to Claim 1, **characterized in that** the elastomer particles have a particle size of 0.05 to 2 mm.

3. Self-sealing pneumatic vehicle tire according to either of the preceding claims, **characterized in that** the elastomer particles are based on natural polyisoprene and/or synthetic polyisoprene and/or polybutadiene and/or styrene-butadiene copolymer and/or butyl rubber and/or halobutyl rubber and/or nitrile-butadiene rubber and/or hydrogenated acrylonitrile-butadiene rubber and/or ethylene-propylene-diene rubber.

4. Self-sealing pneumatic vehicle tire according to any of the preceding claims, **characterized in that** the elastomer particles comprise at least one regenerated rubber material.

5. Self-sealing pneumatic vehicle tire according to any of the preceding claims, **characterized in that** the coating (6) additionally contains at least one alkali metal salt of at least one fatty acid and/or at least one alkaline earth metal salt of at least one fatty acid.

6. Self-sealing pneumatic vehicle tire according to any of the preceding claims, **characterized in that** at least the surface (5b) running in radial direction additionally has the coating (6).

7. Method of producing a self-sealing pneumatic vehicle tire having a belt package (2), a tread (1) arranged radially above the belt package (2) and an airtight inner layer (4) arranged radially on the inside, wherein the self-sealing of the pneumatic vehicle tire is obtained via a sealant layer (5) subsequently applied radially on the inside after the vulcanization of the pneumatic vehicle tire, wherein the sealant layer (5) has roughly the width of the belt package (2) and is arranged roughly in the projection thereof and has a cross section which is formed in a cross-sectional plane including the tire axis and has a surface (5a) running essentially parallel to the belt package in axial direction and a surface (5b) running essentially in radial direction, **characterized in that** at least the surface (5a) of the sealant layer (5) running essentially parallel to the belt package (2) in axial direction has a circumferential coating (6) that contains at least elastomer particles.

8. Method according to Claim 7, **characterized in that** the elastomer particles are applied with a spray gun.

9. Method according to Claim 7, **characterized in that** the elastomer particles are applied in an aqueous suspension of at least one alkali metal salt of at least one fatty acid and/or of at least one alkaline earth metal salt of at least one fatty acid.

10. Method according to Claim 9, **characterized in that** the application is effected with a spray gun or a rotating spray turntable.

## Revendications

1. Pneumatique de véhicule auto-étanchéifiant comprenant un ensemble de nappes d'armature (2), une bande de roulement (1) disposée radialement au-dessus de l'ensemble de nappes d'armature (2) et une couche intérieure (4) étanche à l'air disposée radialement à l'intérieur, l'auto-étanchéification du pneumatique de véhicule étant obtenue par une couche de moyen d'étanchéité (5) appliquée par la suite radialement à l'intérieur après la vulcanisation du pneumatique de véhicule, la couche de moyen d'étanchéité (5) ayant sensiblement la largeur de l'ensemble de nappes d'armature (2) et étant disposée sensiblement dans la projection de celui-ci et comportant une section transversale formée dans le plan en coupe transversale contenant l'axe du pneumatique et pourvue d'une surface (5a), s'étendant sensiblement parallèlement à l'ensemble de nappes d'armature dans la direction axiale et d'une surface (5b) s'étendant sensiblement dans la direction radiale, **caractérisé en ce qu'** au moins la surface (5a), s'étendant sensiblement parallèlement à l'ensemble de nappes d'armature (2) dans la direction axiale, de la couche de moyen d'étanchéité (5) comporte sur la circonférence un revêtement (6) qui contient au moins des particules d'élastomère.

2. Pneumatique de véhicule auto-étanchéifiant selon la revendication 1, **caractérisé en ce que** les particules d'élastomère ont une granulométrie allant de 0,05 à 2 mm.

3. Pneumatique de véhicule auto-étanchéifiant selon l'une des revendications précédentes, **caractérisé en ce que** les particules d'élastomère sont à base de polyisoprène naturel et/ou de polyisoprène synthétique et/ou de polybutadiène et/ou de copolymère styrène-butadiène et/ou de caoutchouc butyle et/ou de caoutchouc halobutyle et/ou de caoutchouc nitrile-butadiène et/ou de caoutchouc acrylonitrile-butadiène hydrogéné et/ou de caoutchouc éthylène-propylène-diène.

4. Pneumatique de véhicule auto-étanchéifiant selon l'une des revendications précédentes, **caractérisé en ce que** les particules d'élastomère sont au moins un régénérateur de caoutchouc.

5. Pneumatique de véhicule auto-étanchéifiant selon l'une des revendications précédentes, **caractérisé en ce que** le revêtement (6) contient en outre au moins un sel alcalin d'au moins un acide gras et/ou au moins un sel alcalino-terreux d'au moins un acide gras.

6. Pneumatique de véhicule auto-étanchéifiant selon l'une des revendications précédentes, **caractérisé en ce qu'** au moins la surface (5b), s'étendant dans la direction radiale, comporte le revêtement (6).

7. Procédé de fabrication d'un pneumatique de véhicule auto-étanchéifiant pourvu d'un ensemble de nappes d'armature (2), d'une bande de roulement (1) disposée radialement au-dessus de l'ensemble de nappes d'armature (2) et d'une couche intérieure (4) étanche à l'air disposée radialement à l'intérieur, l'auto-étanchéification du pneumatique de véhicule étant obtenue par une couche de moyen d'étanchéité (5) appliquée par la suite radialement à l'intérieur après la vulcanisation du pneumatique de véhicule, la couche de moyen d'étanchéité (5) ayant sensiblement la largeur de l'ensemble de nappes d'armature (2) et étant disposée sensiblement dans la projection de celui-ci et comportant une section transversale formée dans le plan en coupe transversale contenant l'axe du pneumatique et pourvue d'une surface (5a), s'étendant sensiblement parallèlement à l'ensemble de nappes d'armature dans la direction axiale et d'une surface (5b) s'étendant sensiblement dans la direction radiale, **caractérisé en ce qu'** au moins la surface (5a), s'étendant sensiblement parallèlement à l'ensemble de nappes d'armature (2) dans la direction axiale, de la couche de moyen d'étanchéité (5) comporte sur la circonférence un revêtement (6) qui contient au moins des particules d'élastomère.

8. Procédé selon la revendication 7, **caractérisé en ce que** les particules d'élastomère sont appliquées avec un pistolet pulvérisateur.

9. Procédé selon la revendication 7, **caractérisé en ce que** les particules d'élastomère sont appliquées dans une suspension aqueuse d'au moins un sel alcalin d'au moins un acide gras et/ou d'au moins un sel alcalino-terreux d'au moins un acide gras.

10. Procédé selon la revendication 9, **caractérisé en ce que** l'application est effectuée avec un pistolet pulvérisateur ou un disque de pulvérisation rotatif.
